# DEMANDE DE BREVET EUROPEEN

(11) **EP 3 199 400 A1**
(43) Date de publication de la demande: **02.08.2017**
(21) Numéro de dépôt: 17152337.6
(22) Date de dépôt: 20.01.2017
(51) Int. Cl.: B60N 2/48

(54) **APPUI-TÊTE DE SIÈGE DE VÉHICULE AUTOMOBILE**

(30) Priorité: 26.01.2016 FR 1650626
(71) Demandeur: Cera TSC, 75008 Paris (FR)
(72) Inventeur: BRICE, Patrick, 54110 Hudiviller (FR)
(74) Mandataire: Sayettat, Julien Christian

(57) **Abrégé**

L'invention concerne un appui-tête (1) comprenant une partie fixe (2) et une partie mobile (3) reliées entre elles par l'intermédiaire d'un dispositif de réglage (4) comprenant : une chambre tubulaire (5) solidaire de ladite partie mobile - ou respectivement de ladite partie fixe - ; un piston solidaire de ladite partie fixe - ou respectivement de ladite partie mobile -, ledit piston séparant ladite chambre en deux sous-chambres ; une vanne (9) disposée de manière à permettre de couper la communication entre lesdites sous-chambres ; un moyen d'actionnement (10) de ladite vanne en ouverture ; un fluide incompressible remplissant ladite chambre ; de sorte que ladite partie mobile puisse : être bloquée par rapport à ladite partie fixe quand ladite vanne est fermée ; être déplacée par rapport à ladite partie fixe, par application d'un effort sur ladite partie mobile, après actionnement de ladite vanne en ouverture.

## Description

L'invention concerne un appui-tête de siège de véhicule automobile.

Il est connu de réaliser un appui-tête de siège de véhicule automobile, ledit appui-tête comprenant une partie fixe destinée à être montée solidairement au dossier dudit siège et une partie mobile destinée à recevoir en appui la tête du passager dudit siège, lesdites parties étant reliées entre elles par l'intermédiaire d'un dispositif de réglage de la position de ladite partie mobile par rapport à ladite partie fixe, de manière à permettre d'optimiser le confort dudit passager.

Des dispositifs de réglage connus permettent un réglage discontinu, une façon de faire usuelle consistant à prévoir un blocage dans la position de réglage choisie par insertion d'un tiroir de blocage dans un cran faisant partie d'une pluralité de crans permettant autant de positions de réglage.

Le document FR-2 736 012 décrit un dispositif de réglage d'un appui-tête supporté au moyen d'au moins un étrier dans un châssis de siège, et pouvant être positionné par encliquetage à différentes hauteurs au moyen d'au moins un élément de manoeuvre, par exemple un bouton d'actionnement porté par l'appui-tête, ledit dispositif comprenant notamment un élément de transmission de force disposé à l'intérieur de l'étrier de support qui est actionnable par le bouton et est en relation fonctionnelle avec un élément de blocage qui passe à travers ledit étrier pour venir s'encliqueter dans un logement prévu à cet effet dans le siège.

Avec un tel mode de réglage, le passager ne peut pas régler finement la position de la partie mobile, puisque cette dernière ne peut être bloquée que selon une quantité limitée de positions de réglage prédéfinies.

D'autres dispositifs de réglage permettent un réglage continu, par exemple en prévoyant un blocage dans la position retenue par arc-boutement d'une pièce de blocage.

Si un tel mode de réglage permet un réglage très fin de la position de la partie mobile, il peut cependant réaliser un blocage insuffisant de ladite partie mobile en cas d'effort violent appliqué dessus par la tête du passager, ceci notamment en situation d'accident du véhicule, ce qui peut être préjudiciable à la sécurité du passager.

L'invention a pour but de pallier ces inconvénients en proposant un appui-tête qui permette un réglage continu de la partie mobile tout en assurant son maintien très ferme dans la position de réglage retenue.

A cet effet, l'invention propose un appui-tête de siège de véhicule automobile, ledit appui-tête comprenant une partie fixe destinée à être montée solidairement au dossier dudit siège et une partie mobile destinée à recevoir en appui la tête du passager dudit siège, lesdites parties étant reliées entre elles par l'intermédiaire d'un dispositif de réglage de la position de ladite partie mobile par rapport à ladite partie fixe, ledit dispositif comprenant :
- une chambre tubulaire solidaire de ladite partie mobile - ou respectivement de ladite partie fixe -,
- un piston solidaire de ladite partie fixe - ou respectivement de ladite partie mobile -, ledit piston séparant ladite chambre en deux sous-chambres,
- une vanne disposée de manière à permettre de couper la communication entre lesdites sous-chambres,
- un moyen d'actionnement de ladite vanne en ouverture,
- un fluide incompressible remplissant ladite chambre,
de sorte que ladite partie mobile puisse :
- être bloquée par rapport à ladite partie fixe quand ladite vanne est fermée,
- être déplacée par rapport à ladite partie fixe, par application d'un effort sur ladite partie mobile, après actionnement de ladite vanne en ouverture.

Dans cette description, les termes de positionnement dans l'espace (haut, bas, supérieur, longitudinal, transversal, vertical, dessous,...) sont pris en référence à l'appui-tête disposé en situation d'utilisation dans le véhicule.

Avec l'agencement proposé, le passager peut régler très finement la position de la partie mobile, ce qui permet d'optimiser le confort, et ceci avec un blocage très ferme de ladite partie dans la position de réglage retenue, ce qui permet d'assurer une sécurité optimale dudit passager.

L'efficacité du blocage de la partie mobile dans la position de réglage retenue est liée au caractère incompressible du fluide utilisé.

D'autres particularités et avantages de l'invention apparaîtront dans la description qui suit, faite en référence aux figures jointes, dans lesquelles :

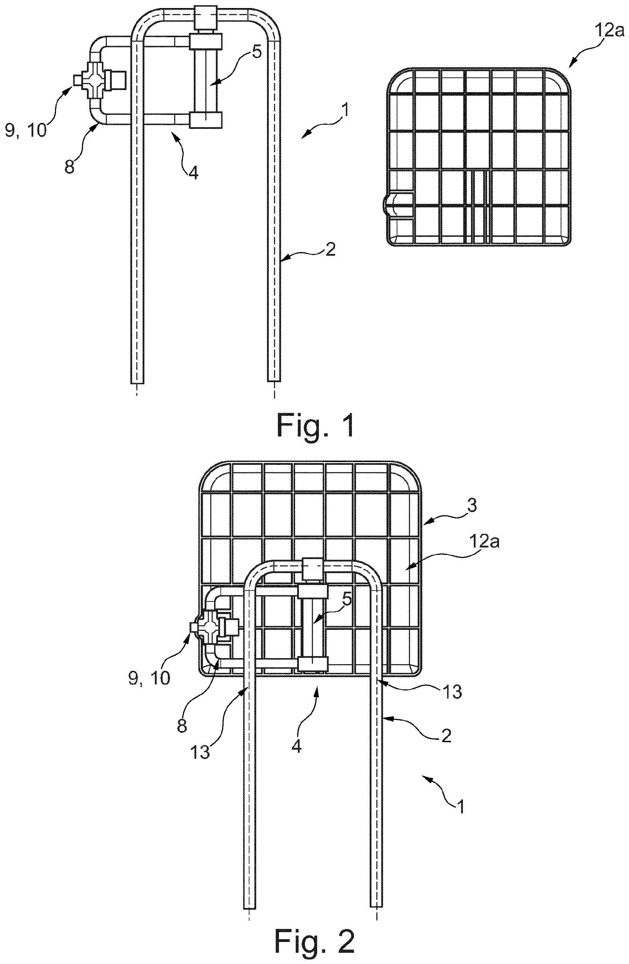

- la figure 1 est une vue de face partielle éclatée d'un appui-tête selon une réalisation, le dispositif de réglage de la partie mobile étant dans un état correspondant à un positionnement de ladite la partie en position maxi-haute, la vanne du circuit tubulaire étant fermée,
- la figure 2 est analogue à la figure 1, une demi-coque de la partie mobile étant montée solidairement à la chambre tubulaire du dispositif de réglage,

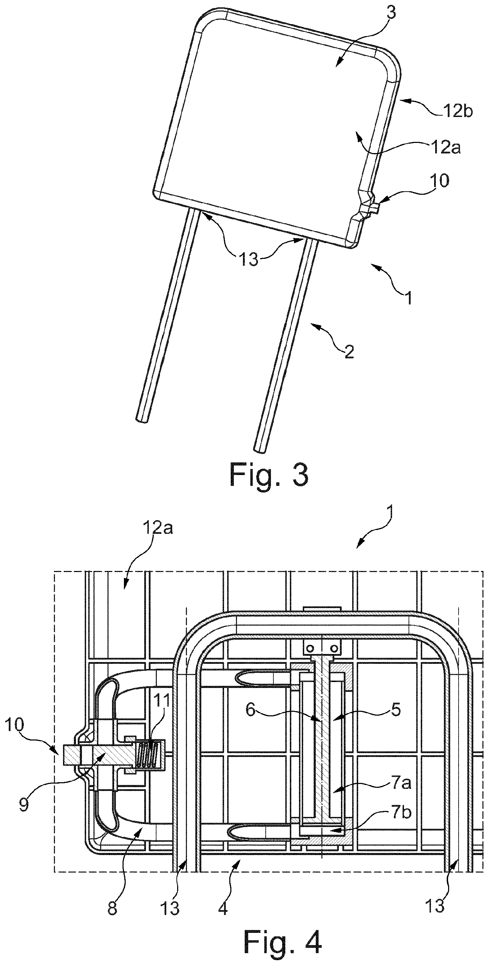

- la figure 3 est une vue en perspective partielle de l'appui-tête des figures précédentes, les deux demi-coques de la partie mobile étant montées solidairement à la chambre tubulaire,
- la figure 4 est une vue agrandie partielle et en semi-coupe verticale transversale de la figure 2,

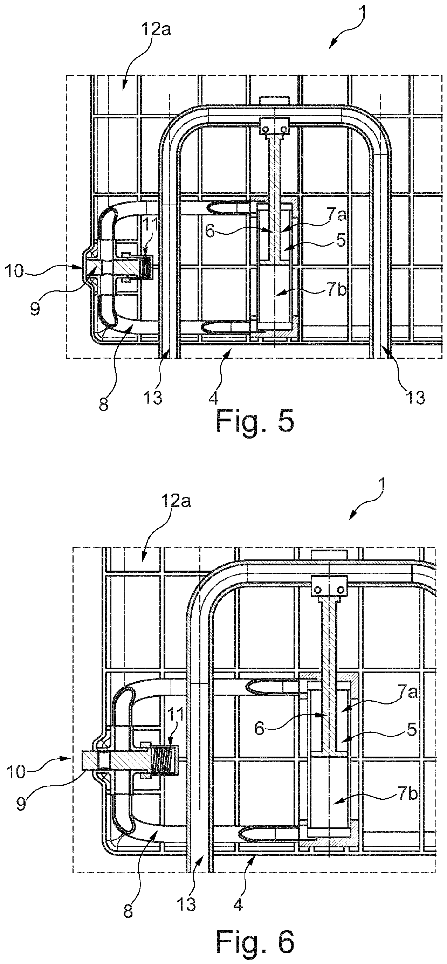

- la figure 5 est analogue à la figure 4, la vanne étant ouverte et la partie mobile étant en cours de déplacement vers le bas,
- la figure 6 est analogue à la figure 4, la partie mobile étant bloquée en-dessous de sa position maxi-haute après fermeture de la vanne.

En référence aux figures, on décrit un appui-tête 1 de siège de véhicule automobile, ledit appui-tête comprenant une partie fixe 2 destinée à être montée solidairement au dossier dudit siège et une partie mobile 3 destinée à recevoir en appui la tête du passager dudit siège, lesdites parties étant reliées entre elles par l'intermédiaire d'un dispositif de réglage 4 de la position de ladite partie mobile par rapport à ladite partie fixe, ledit dispositif comprenant :
- une chambre tubulaire 5 solidaire de ladite partie mobile - ou respectivement de ladite partie fixe -,
- un piston 6 solidaire de ladite partie fixe - ou respectivement de ladite partie mobile -, ledit piston séparant ladite chambre en deux sous-chambres 7a,7b,
- une vanne 9 disposée de manière à permettre de couper la communication entre lesdites sous-chambres,
- un moyen d'actionnement 10 de ladite vanne en ouverture,
- un fluide incompressible remplissant ladite chambre, ledit fluide étant par exemple à base d'huile,
de sorte que ladite partie mobile puisse :
- être bloquée par rapport à ladite partie fixe quand ladite vanne est fermée,
- être déplacée par rapport à ladite partie fixe, par application d'un effort sur ladite partie mobile, après actionnement de ladite vanne en ouverture.

On notera que, dans la réalisation représentée, le réglage de la partie mobile 3 peut se faire d'une seule main, l'occupant du siège ayant simplement, avec la même main, à activer le moyen d'actionnement 10 - qui est solidaire en translation de ladite partie - et à appliquer une force dans la direction choisie pour amener ladite partie dans la position de réglage choisie.

Le blocage dans la position de réglage choisie se fait simplement en arrêtant l'activation du moyen d'actionnement 10 lorsque ladite position a été atteinte.

Selon la réalisation représentée, le dispositif 4 comprend en outre un circuit tubulaire 8 reliant les extrémités de la chambre 5, la vanne 9 étant disposée sur ledit circuit, le fluide incompressible remplissant ladite chambre et ledit circuit.

En variante non représentée, la vanne 9 peut être disposée au niveau du piston 6.

Selon la réalisation représentée, la chambre 5 s'étend sensiblement verticalement, de manière à permettre un réglage vertical de la partie mobile 3.

Selon une variante non représenté, la chambre 5 s'étend sensiblement longitudinalement, de manière à permettre un réglage longitudinal de la partie mobile 3.

Selon la réalisation représentée, la vanne 9 est montée en coulissement transversal par rapport au circuit 8, de manière à permettre son ouverture par appui sur un moyen d'actionnement 10 en forme de bouton-poussoir, un moyen ressort 11 étant monté de manière à actionner ladite vanne en fermeture lorsque ledit moyen d'actionnement n'est pas activé.

Selon la réalisation représentée, l'appui-tête 1 présente en outre les caractéristiques suivantes :
- la partie fixe 2 comprend une armature tubulaire métallique recourbée en forme générale de U renversé,
- le piston 6 est monté solidairement à la partie médiane du U,
- la partie mobile 3 comprend deux demi-coques 12a,12b assemblées pour former une coque de logement de la partie supérieure de ladite armature, ladite coque présentant deux orifices 13 de passage en coulissement des branches du U,
- la chambre 5 et le circuit 8 sont montés - notamment par emboitement - solidairement à l'une desdites demi-coques.

De façon non représentée, le piston 6 comprend un joint d'étanchéité, ledit joint étant agencé - par exemple de par son épaisseur combinée à la nature de son matériau constitutif - de manière à ne plus assurer d'étanchéité - notamment par rupture ou par déformation - à partir d'un effort seuil appliqué à la partie mobile 3 selon une direction de réglage alors que la vanne 9 est fermée.

On réalise ainsi une absorption d'énergie propice à assurer la sécurité du passager, la partie mobile 3 étant mise en mouvement à partir de l'effort seuil sus-évoqué.

## Revendications

1. Appui-tête (1) de siège de véhicule automobile, ledit appui-tête comprenant une partie fixe (2) destinée à être montée solidairement au dossier dudit siège et une partie mobile (3) destinée à recevoir en appui la tête du passager dudit siège, lesdites parties étant reliées entre elles par l'intermédiaire d'un dispositif de réglage (4) de la position de ladite partie mobile par rapport à ladite partie fixe, ledit dispositif comprenant :
• une chambre tubulaire (5) solidaire de ladite partie mobile - ou respectivement de ladite partie fixe -,
• un piston (6) solidaire de ladite partie fixe - ou respectivement de ladite partie mobile -,
ledit appui-tête étant **caractérisé en ce que** le piston (6) sépare la chambre (5) en deux sous-chambres (7a,7b), ledit dispositif comprenant en outre :
• une vanne (9) disposée de manière à permettre de couper la communication entre lesdites sous-chambres,
• un moyen d'actionnement (10) de ladite vanne en ouverture,
• un fluide incompressible remplissant ladite chambre,
de sorte que ladite partie mobile puisse :
• être bloquée par rapport à ladite partie fixe quand ladite vanne est fermée,
• être déplacée par rapport à ladite partie fixe, par application d'un effort sur ladite partie mobile, après actionnement de ladite vanne en ouverture.

2. Appui-tête selon la revendication 1, **caractérisé en ce que** le dispositif (4) comprend en outre un circuit tubulaire (8) reliant les extrémités de la chambre (5), la vanne (9) étant disposée sur ledit circuit, le fluide incompressible remplissant ladite chambre et ledit circuit.

3. Appui-tête selon l'une des revendications 1 ou 2, **caractérisé en ce que** la chambre (5) s'étend sensiblement verticalement, de manière à permettre un réglage vertical de la partie mobile (3).

4. Appui-tête selon l'une des revendications 1 ou 2, **caractérisé en ce que** la chambre (5) s'étend sensiblement longitudinalement, de manière à permettre un réglage longitudinal de la partie mobile (3).

5. Appui-tête selon l'une quelconque des revendications 2 à 4, **caractérisé en ce que** la vanne (9) est montée en coulissement transversal par rapport au circuit (8), de manière à permettre son ouverture par appui sur un moyen d'actionnement (10) en forme de bouton-poussoir, un moyen ressort (11) étant monté de manière à actionner ladite vanne en fermeture lorsque ledit moyen d'actionnement n'est pas activé.

6. Appui-tête selon l'une quelconque des revendications 3 à 5, quand elle se rattache à la revendication 2, **caractérisé en ce que** :
• la partie fixe (2) comprend une armature tubulaire métallique recourbée en forme générale de U renversé,
• le piston (6) est monté solidairement à la partie médiane du U,
• la partie mobile (3) comprend deux demi-coques (12a,12b) assemblées pour former une coque de logement de la partie supérieure de ladite armature, ladite coque présentant deux orifices (13) de passage en coulissement des branches du U,
• la chambre (5) et le circuit (8) sont montés solidairement à l'une desdites demi-coques.

7. Appui-tête selon l'une quelconque des revendications 1 à 6, **caractérisé en ce que** le piston (6) comprend un joint d'étanchéité, ledit joint étant agencé de manière à ne plus assurer d'étanchéité à partir d'un effort seuil appliqué à la partie mobile (3) selon une direction de réglage alors que la vanne (9) est fermée.
